(19) Europäisches Patentamt
European Patent Office
Office européen des brevets

(11) **EP 4 738 470 A1**

(12) **EUROPEAN PATENT APPLICATION**

(43) Date of publication:
06.05.2026 Bulletin 2026/19

(21) Application number: 25212539.8

(22) Date of filing: 31.10.2025

(51) International Patent Classification (IPC):
*H01M 4/525* (2010.01)    *C01G 53/82* (2025.01)

(52) Cooperative Patent Classification (CPC):
H01M 4/525; C01G 53/82; H01M 2004/028

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 31.10.2024 KR 20240151738

(71) Applicant: ECOPRO BM CO., LTD.
Cheongju-si, Chungcheongbuk-do 28117 (KR)

(72) Inventors:
• NAM, Yu jin
28117 Ochang-eup, Cheongwon-gu, Cheongju-si,
Chungcheong (KR)
• KIM, Sun Hwa
28117 Ochang-eup, Cheongwon-gu, Cheongju-si (KR)
• HEO, Seungwoo
28117 Ochang-eup, Cheongwon-gu, Cheongju-si (KR)

• PARK, SungYoon
28117 Ochang-eup, Cheongwon-gu, Cheongju-si (KR)
• LEE, Jae Min
28117 Ochang-eup, Cheongwon-gu, Cheongju-si (KR)
• KWON, Ohyeon
28117 Ochang-eup, Cheongwon-gu, Cheongju-si (KR)
• LEE, Jaekyun
28117 Ochang-eup, Cheongwon-gu, Cheongju-si (KR)
• KWAK, Hwan Wook
28117 Ochang-eup, Cheongwon-gu, Cheongju-si (KR)
• JO, Min Su
28117 Ochang-eup, Cheongwon-gu, Cheongju-si (KR)
• SEON, Younghoe
28117 Ochang-eup, Cheongwon-gu, Cheongju-si (KR)

(74) Representative: Gottschald
Patentanwälte Partnerschaft mbB
Klaus-Bungert-Straße 1
40468 Düsseldorf (DE)

(54) **POLYCRYSTALLINE CATHODE ACTIVE MATERIAL AND LITHIUM SECONDARY BATTERY CONTAINING THE SAME**

(57)    The present disclosure relates to a novel polycrystalline cathode active material, and more specifically, provides a novel polycrystalline cathode active material having an effect of improving lifetime characteristics while securing excellent output and capacity characteristics by determining an optimal size and number of primary particles and a size of secondary particles by utilizing peak intensities of an H2 phase and an H3 phase.

Fig. 1

EP 4 738 470 A1

# EP 4 738 470 A1

## Description

### TECHNICAL FIELD

The present disclosure relates to a polycrystalline cathode active material and a lithium secondary battery comprising the same. More specifically, the present disclosure relates to a novel polycrystalline cathode active material that exhibits lifetime, capacity, and output characteristics different from those of conventional polycrystalline cathode active materials, and to a lithium secondary battery including the same.

### BACKGROUND

A lithium secondary battery is a battery that stores and releases energy by moving lithium ions between electrodes. Owing to its characteristic of being chargeable and dischargeable, it is extensively utilized in various fields, including electronic devices, electric vehicles, and energy storage systems. In particular, lithium ions, being lighter in weight and possessing a higher energy density than other metal ions, play an important role in the development of high-efficiency batteries. Among the important factors that determine the performance of a lithium secondary battery is the cathode active material, which maintains stability during the insertion and extraction of lithium ions, and directly influences the capacity and lifespan of the battery.

Depending on the type of cathode active material, the energy density, output, lifetime, and stability of the battery vary greatly. The cathode active material is generally composed of a lithium metal oxide, and representative examples thereof comprise lithium cobalt oxide (LCO), lithium manganese oxide (LMO), lithium nickel cobalt manganese oxide (NCM), and lithium nickel cobalt aluminum oxide (NCA).

Recently, mid-nickel and high-nickel cathode active materials have attracted attention in order to satisfy the high energy density and capacity demanded in electric vehicles and the like. Nickel-based cathode materials are gaining popularity in markets demanding higher-performance batteries, as their energy density and capacity increase with a higher nickel content. Representative materials include high-nickel NCM (nickel, cobalt, manganese) and NCA (nickel, cobalt, aluminum) materials, which contribute to extending the driving range of electric vehicles and enhancing the energy efficiency of batteries.

Cathode active materials can be divided into polycrystalline and single-crystal materials according to their crystal structure.

A polycrystalline cathode active material is a structure in which a plurality of small crystal particles gather to form a single particle. Polycrystalline structures are relatively easy to manufacture, are less costly, and exhibit excellent performance at specific charge/discharge rates. However, polycrystalline particles are susceptible to inter-particle cracking during charging and discharging processes, and are accompanied by gas generation, which is disadvantageous in terms of long-term lifespan. In particular, there is a great need to solve the expansion and stability problems caused by gas generation in high-nickel polycrystalline cathode materials.

A single crystal cathode material is a particle structure composed of a single crystal. The single-crystal structure has the advantage of reduced inter-particle cracking during charging and discharging, enhanced stability, and an extended lifespan. However, single-crystal materials have the disadvantages of being difficult to manufacture, incurring high costs, and exhibiting inferior output characteristics as compared with polycrystalline materials. Additionally, when having the same nickel composition, the capacity tends to be lower than that of a polycrystalline material, which may result in performance degradation.

Accordingly, in order to improve the performance of lithium secondary batteries, it is necessary to develop a novel type of cathode active material that addresses the problems arising in nickel-based cathode active materials and compensates for the shortcomings of polycrystalline and single-crystal cathode active materials.

### PRIOR ART DOCUMENTS

### PATENT DOCUMENTS

(Patent Document 1) Korean Patent Publication No. 10-2023-0162830

### SUMMARY

### TECHNICAL PROBLEM

An object of the present disclosure is to provide a novel polycrystalline cathode active material which, through primary particles having an average particle diameter of 500 nm or greater, is capable of securing excellent output and

2

capacity characteristics while improving lifetime characteristics.

Another object of the present disclosure is to provide a lithium secondary battery comprising the polycrystalline cathode active material.

**SOLUTION TO THE PROBLEM**

An embodiment of the present disclosure provides a polycrystalline cathode active material comprising primary particles having an average particle diameter (D50) of 500 nm to 5 μm, and secondary particles formed by agglomeration of the primary particles, wherein a portion of the primary particles is exposed on an outer surface of the secondary particles.

The average particle diameter (D50) of the primary particles and secondary particles may be determined by an H2 intensity ratio calculated by the following Equation 1.

[Formula 1]

$$H2 \text{ intensity ratio} - \frac{H2 \text{ intensity}}{H2 \text{ intensity} + H3 \text{ intensity}} \times 100$$

(In Formula 1, the H2 intensity and the H3 intensity are the peak intensities of an H2 phase and an H3 phase obtained through X-ray diffraction (XRD) analysis.)

The number of primary particles forming the secondary particles may be determined by an H2 intensity ratio calculated by Formula 1 below.

[Formula 1]

$$H2 \text{ intensity ratio} = \frac{H2 \text{ intensity}}{H2 \text{ intensity} + H3 \text{ intensity}} \times 100$$

(In Formula 1, the H2 intensity and the H3 intensity are the peak intensities of an H2 phase and an H3 phase obtained through X-ray diffraction (XRD) analysis.)

When the nickel content of the primary particles is 50 mol% or more and less than 80 mol%, the average particle diameter (D50) of the primary particles and the secondary particles may be measured at an $H_2$ intensity ratio of 5% or more and 16% or less.

When the nickel content of the primary particles is 50 mol% or more and less than 80 mol%, the number of primary particles constituting the secondary particles may be measured at an $H_2$ intensity ratio of 5% or more and 16% or less.

When the nickel content of the primary particles is 80 mol% or more, the average particle diameter (D50) of the primary particles and the secondary particles may be measured at an $H_2$ intensity ratio of 10% or more and 25% or less.

When the nickel content of the primary particles is 80 mol% or more, the number of primary particles constituting the secondary particles may be measured at an $H_2$ intensity ratio of 10% or more and 25% or less.

The average particle diameter (D50) of the secondary particles may be 1.5 to 5.0 times the average particle diameter (D50) of the primary particles.

The secondary particles may be formed by agglomerating two to five primary particles.

Another embodiment of the present disclosure provides a cathode slurry composition comprising the polycrystalline cathode active material, a conductive material, and a binder.

Still another embodiment of the present disclosure provides a lithium secondary battery comprising a cathode formed by coating a current collector with the cathode slurry composition.

**ADVANTAGEOUS EFFECTS OF THE INVENTION**

The polycrystalline cathode active material according to an embodiment of the present disclosure has the advantage of improving lifetime characteristics while securing capacity and output characteristics, by deriving secondary particles of an optimal size in which an optimal number of primary particles having an average particle diameter of 500 nm or greater are agglomerated.

## BRIEF DESCRIPTION OF DRAWINGS

FIG. 1 is a schematic diagram of a polycrystalline cathode active material according to one embodiment of the present disclosure.

FIG. 2 is a set of photographs showing the cathodes of Examples 1 to 3 and Comparative Examples 1 to 5 observed using a scanning electron microscope (SEM).

FIG. 3 is a graph showing the correlation between the lifetime and the $H_2$ intensity ratio of Examples 1 to 3 and Comparative Examples 1 to 5.

## DETAILED DESCRIPTION

Expressions such as "comprising," as used herein, should be understood as open-ended terms that imply the possibility of including other technical features.

As used herein, the terms "for example," "in one embodiment," and "preferably" refer to embodiments of the present disclosure that may provide certain advantages under certain conditions, and are not intended to exclude other embodiments from the scope of the present disclosure.

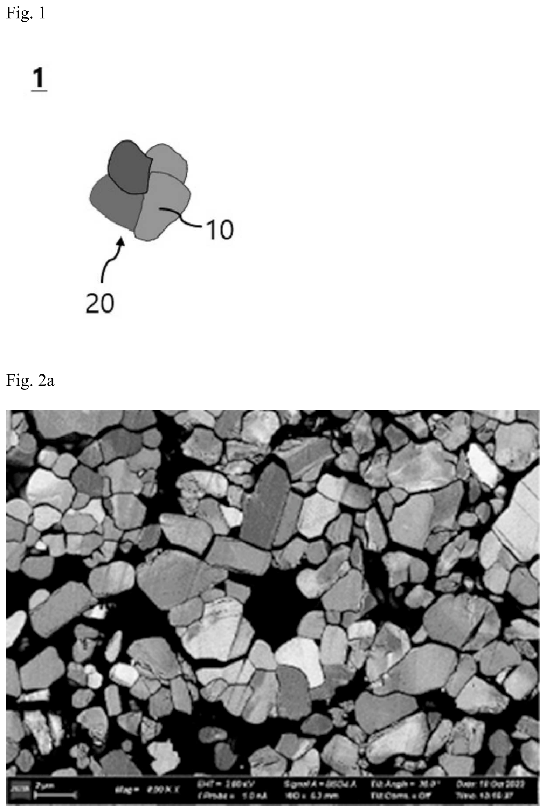

FIG. 1 is a schematic diagram of the shape of a polycrystalline cathode active material (1) according to one embodiment of the present disclosure. Referring to FIG. 1, a polycrystalline cathode active material (1) according to one embodiment of the present invention includes primary particles (10) and secondary particles (20) formed by agglomerating the primary particles (10), wherein a portion of the primary particles (10) is exposed on an outer surface of the secondary particles (20).

For example, the cathode active material may be a lithium composite oxide.

As a preferred example, the lithium composite oxide may be represented by the following Chemical Formula 1.

$$[\text{Chemical Formula 1}] \qquad Li_wNi_{1-(x+y+z)}Co_xM1_yM2_zO_2$$

(Herein, M1 is at least one selected from Mn and Al, M2 is at least one selected from Mn, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd, B and Cu, M1 and M2 are different elements from each other, and $0.5 \leq w \leq 1.5$, $0 \leq x \leq 0.50$, $0 < y \leq 0.20$, and $0 \leq z \leq 0.20$)

As a preferred example, the cathode active material may be a nickel lithium composite oxide (HNCM, High-Nickel Lithium Composite Oxide) of the following [Chemical Formula 2].

$$[\text{Chemical Formula 2}] \qquad LiNi_xMn_yCo_zO_2$$

Herein, $x+y+z=1$, $0.40 \leq x \leq 0.96$, $0 < y \leq 0.20$, and $0 \leq z \leq 0.20$.

For example, the primary particle may be a mid-nickel cathode active material.

As a preferred example, the primary particles may have a nickel content of 50 mol% or more, 53 mol% or more, 56 mol% or more, 59 mol% or more, or 60 mol% or more, based on 100 mol% of the total composition. Additionally, with respect to 100 mol% of the total primary particles, the nickel content may be less than 80 mol%, 75 mol% or less, or 70 mol% or less.

For example, the primary particle may be a high-nickel cathode active material.

As a preferred example, the primary particles may have a nickel content of 80 mol% or more, 83 mol% or more, 86 mol% or more, 89 mol% or more, or 90 mol% or more, based on 100 mol% of the total amount. Additionally, with respect to 100 mol% of the total primary particles, the nickel content may be less than 110 mol%, 105 mol% or less, or 100 mol% or less.

The primary particles (10) may have an average particle diameter (D50) of 500 nm or more, 600 nm or more, 700 nm or more, 800 nm or more, or 900 nm or more. In addition, the primary particles (10) may have an average particle diameter (D50) of 5 μm or less, 4.8 μm or less, 4.6 μm or less, 4.4 μm or less, or 4.1 μm or less. For the primary particles (10) having the above-described average particle diameter, the lithium ion migration path inside the particles becomes smoother and conductivity is enhanced, which is advantageous for capacity and output characteristics.

The term "average particle diameter (D50)" as used in the present application may refer to the median particle diameter corresponding to 50% in a cumulative distribution (number-based distribution) in which the particles are arranged in order of size.

For example, the secondary particle (20) may be formed by an agglomeration of two or more primary particles (10). At this time, the secondary particles (20) may be stabilized as a single larger structure by the primary particles (10) being closely adhered to and bonded with each other. The agglomeration of the primary particles (10) increases the interparticle cohesion, thereby reducing the occurrence of particle cracking during charging and discharging and enhancing the performance and lifespan characteristics of the battery. In addition, the aggregated secondary particles (20) are advantageous in securing a movement path for lithium ions and help lithium ions to diffuse smoothly within the cathode active material (1).

For example, the primary particle (10) may be in a form in which a portion of the primary particle (10) is exposed on an outer surface of the secondary particle (20). The form in which the primary particle (10) is exposed refers to a structure in which the primary particles (10) are partially exposed on the outer surface of the secondary particle (20). That is, rather than the primary particle (10) being completely embedded within the secondary particle (20), a portion of the primary particle (10) is in contact with the outside, allowing lithium ions or electrons to readily access it.

As a preferred example, the aggregated secondary particles (20) may not comprise isolated primary particles (10) therein. An isolated primary particle (10) refers to a particle that is trapped inside a secondary particle (20) and does not come into contact with the outside.

As a preferred example, two or more, three or more, or four or more of the primary particles (10) may aggregate to form secondary particles (20). In addition, the primary particles (10) may be agglomerated into 10 or fewer, 9 or fewer, 8 or fewer, 7 or fewer, 6 or fewer, or 5 or fewer to form the secondary particles (20). In this case, the optimal particle density and uniform size distribution are maintained, ensuring an efficient movement path for lithium ions and minimizing interactions between particles during charging and discharging.

For example, the average particle diameter of the secondary particles (20) may be measured as the average particle diameter when isolated primary particles (10) are not included.

When a lithium secondary battery is charged, lithium ions escape from the cathode, and at the same time, electrons move to the anode through an external circuit. In this process, the crystal structure within the cathode active material (1) changes, and structural deformation and phase transition occur due to the delithiation of lithium ions.

In this specification, the H1 phase (H1-phase) refers to the structure of the cathode active material (1) in a discharged state in which lithium ions are sufficiently inserted, and the H2 phase (H2-phase) refers to an intermediate charged state in which lithium ions are partially delithiated. Meanwhile, an H3 phase (H3-phase) refers to a high-charge state in which lithium ions are almost completely deintercalated. As charging progresses, lithium ions escape from inside the cathode active material (1), causing the c-axis of the cathode active material (1) to contract, resulting in a phase transition from the H2 phase to the H3 phase.

However, if the c-axis of the cathode active material (1) shrinks, cracks may occur in the cathode active material particles, which may result in the formation of isolated particles inside. These isolated particles hinder the diffusion of lithium ions and thus cannot contribute to capacity. That is, isolated particles cause degradation of charging efficiency, capacity, and lifetime. Additionally, if the H2 phase that has not transitioned to the H3 phase remains, H2-H3 phase separation occurs. The H2-H3 phase separation can be confirmed through X-ray diffraction (XRD) analysis, and the ratio of the H2 phase to the H3 phase can be used to evaluate a region within the cathode active material (1) where lithium ion diffusion is not smooth, i.e., a region where isolated particles are present.

As a preferred example, the average particle diameter of the primary particles and the secondary particles (20) of the cathode active material (1) in a charged state may be determined through X-ray diffraction (XRD) analysis of the H2 phase and the H3 phase.

As a preferred example, when the nickel content of the primary particles is 50 mol% or more and less than 80 mol%, the average particle diameter of the primary particles and the secondary particles may be the particle size when the $H_2$ intensity ratio calculated by the following Formula 1 is 5% or more, 6% or more, 7% or more, or 8% or more, and 16% or less, 15% or less, or 14% or less.

[Formula 1]

$$H2 \text{ intensity ratio} = \frac{H2 \text{ intensity}}{H2 \text{ intensity} + H3 \text{ intensity}} \times 100$$

As a preferred example, in the case of a mid-nickel cathode active material in which the nickel content of the primary particles is 50 mol% or more and less than 80 mol%, the XRD peak intensities of the H2 phase and the H3 phase may be measured and their ratio calculated, which may serve as an indicator that a greater amount of the H2 phase corresponds to a greater number of isolated particles due to insufficient delithiation of lithium ions. Meanwhile, when the value is 5% or more and 16% or less, no degradation of lifespan occurs in the absence of isolated particles, and the sizes of the primary particles (10) and the secondary particles (20) determined at this time may be regarded as the optimal sizes.

The X-ray diffraction (XRD) analysis may be performed by irradiating Cu-K$\alpha$ rays onto the cathode active material (1) and measuring the diffraction intensity at the diffraction angle (20) appearing on the (104) plane.

As a preferred example, when the nickel content of the primary particles is 80 mol% or more, the average particle diameter of the primary particles and the secondary particles may be the particle size when the $H_2$ intensity ratio calculated by the following Formula 1 is 10% or more or 11% or more, and 25% or less or 23% or less.

[Formula 1]

$$H2 \text{ intensity ratio} = \frac{H2\ intensity}{H2\ intensity + H3\ intensity} \times 100$$

As a preferred example, in the case of a high-nickel cathode active material having a nickel content of 80 mol% or more in the primary particles, the XRD peak intensities of the H2 phase and the H3 phase can be measured and their ratio calculated, which can be used as an indicator that the more H2 phase there is, the more isolated particles there are due to poor desorption of lithium ions. Meanwhile, when the ratio is 10% or more and 25% or less, no degradation of lifespan occurs in the absence of isolated particles, and the sizes of the primary particles (10) and the secondary particles (20) determined at this time may be regarded as the optimal sizes.

For example, the average particle diameter (D50) of the secondary particles (20) may be 1.2 times or more, 1.3 times or more, 1.4 times or more, 1.5 times or more, or 1.6 times or more, and 6.0 times or less, 5.8 times or less, 5.6 times or less, 5.4 times or less, 5.2 times or less, or 5.0 times or less the average particle diameter (D50) of the primary particles (10). In the case of the polycrystalline cathode active material (1) satisfying the above range, the lifespan retention rate increases as the particle size grows, similar to that of a single-crystal particle, even when including primary particles (10) of 500 nm to 5 $\mu$m.

For example, the number of primary particles forming secondary particles in the cathode active material (1) in a charged state can be determined through X-ray diffraction (XRD) analysis of the H2 phase and H3 phase.

[Formula 1]

$$H2 \text{ intensity ratio} = \frac{H2\ intensity}{H2\ intensity + H3\ intensity} \times 100$$

(In Formula 1, the H2 intensity and the H3 intensity are the peak intensities of an H2 phase and an H3 phase obtained through X-ray diffraction (XRD) analysis.)

As a preferred example, when the nickel content of the primary particles is 50 mol% or more and less than 80 mol%, the number of primary particles constituting the secondary particles may be determined when the $H_2$ intensity ratio calculated by the following Formula 1 is 5% or more, 6% or more, 7% or more, or 8% or more, and 16% or less, 15% or less, or 14% or less.

[Formula 1]

$$H2 \text{ intensity ratio} = \frac{H2\ intensity}{H2\ intensity + H3\ intensity} \times 100$$

As a preferred example, in the case of a mid-nickel cathode active material in which the nickel content of the primary particles is 50 mol% or more and less than 80 mol%, the XRD peak intensities of the H2 phase and the H3 phase may be measured and their ratio calculated. This may serve as an indicator that the greater the amount of the H2 phase, the greater the number of isolated particles due to insufficient delithiation of lithium ions. Meanwhile, when the value is 5% or more and 16% or less, no degradation of lifespan occurs in the absence of isolated particles, and the number of primary particles constituting the determined secondary particles may be regarded as the optimal number.

The X-ray diffraction (XRD) analysis may be performed by irradiating Cu-Kα rays onto the cathode active material (1) and measuring the diffraction intensity at the diffraction angle (2θ) appearing on the (104) plane.

As a preferred example, when the nickel content of the primary particles is 80 mol% or more, the number of primary particles constituting the secondary particles may be determined when the $H_2$ intensity ratio calculated by the following Formula 1 is 10% or more or 11% or more, and 25% or less or 23% or less.

[Formula 1]

$$H2\ intensity\ ratio = \frac{H2\ intensity}{H2\ intensity + H3\ intensity} \times 100$$

As a preferred example, in the case of a high-nickel cathode active material having a nickel content of 80 mol% or more in the primary particles, the XRD peak intensities of the H2 phase and the H3 phase can be measured and their ratio calculated, which can be used as an indicator that the more H2 phase there is, the more isolated particles there are due to poor desorption of lithium ions. Meanwhile, when the ratio is between 10% and 25%, the number of primary particles forming the determined secondary particles can be considered as the optimal number, as it does not cause a decrease in lifetime without isolated particles.

As a preferred example, two or more, three or more, or four or more of the primary particles (10) may aggregate to form secondary particles (20). In addition, the primary particles (10) may aggregate into 10 or fewer, 9 or fewer, 8 or fewer, 7 or fewer, or 6 or fewer to form secondary particles (20).

A cathode slurry composition according to one embodiment of the present disclosure comprises the above-described polycrystalline cathode active material, a conductive material, and a binder.

For example, the conductive material is used to impart conductivity to the electrode, and may be used in the battery without particular limitation so long as it does not cause chemical changes and possesses electronic conductivity. Specific examples include: graphite such as natural graphite or artificial graphite; carbonaceous materials such as carbon black, acetylene black, Ketjen black, channel black, furnace black, lamp black, thermal black, or carbon fibers; metal powders or metal fibers such as copper, nickel, aluminum, or silver; conductive whiskers such as zinc oxide or potassium titanate; conductive metal oxides such as titanium oxide; or conductive polymers such as polyphenylene derivatives, and any one of these or a mixture of two or more thereof may be used. The conductive material may typically be included in an amount of 1 to 30 wt% based on the total weight of the cathode slurry composition.

For example, the binder serves to enhance the adhesion between cathode active material particles and the adhesion between the cathode active material and the cathode current collector. Specific examples include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber (SBR), fluoro rubber, or various copolymers thereof, and any one of these may be used alone or a mixture of two or more thereof. The binder may be contained in an amount of 1 to 30 wt% based on the total weight of the cathode slurry.

In a preferred embodiment, the cathode slurry may further comprise a solvent. The solvent may be one commonly used in the relevant technical field, and may include dimethylsulfoxide (DMSO), isopropyl alcohol, N-methylpyrrolidone (NMP), acetone, or water, and any one of these may be used alone, or a mixture of two or more thereof may be used. The amount of the solvent used need only be sufficient to dissolve or disperse the cathode active material, conductive material, and binder, taking into account the coating thickness and the manufacturing yield of the slurry, and to provide a viscosity capable of exhibiting excellent thickness uniformity when applied in subsequent cathode manufacturing.

A lithium secondary battery according to one embodiment of the present disclosure comprises a cathode formed by coating a current collector with the above-described cathode slurry composition.

For example, the cathode may be manufactured by applying a cathode slurry composition comprising the above-described cathode active material and, optionally, a binder and a conductive material onto a cathode current collector, followed by drying and rolling. At this time, the types and contents of the cathode active material, binder, and conductive material are as described above.

Alternatively, the cathode may be manufactured by casting the cathode slurry composition onto a separate support, peeling a film obtained therefrom, and laminating the film onto a cathode current collector.

For example, the cathode current collector is not particularly limited so long as it is conductive and does not cause a chemical change in the battery, and examples include stainless steel, aluminum, nickel, titanium, calcined carbon, or aluminum or stainless steel surface-treated with carbon, nickel, titanium, silver, and the like. In addition, the cathode current collector may typically have a thickness of 3 to 500 $\mu$m, and fine irregularities may be formed on the surface of the cathode current collector to enhance the adhesion of the cathode active material. For example, it can be used in various forms such as films, sheets, foils, nets, porous bodies, foams, and non-woven fabrics.

According to another embodiment of the present disclosure, an electrochemical device including the cathode is provided. The above electrochemical device may specifically be a battery or a capacitor, and more particularly may be a lithium secondary battery.

For example, the lithium secondary battery specifically comprises a cathode, an anode disposed opposite to the cathode, a separator interposed between the cathode and the anode, and an electrolyte, wherein the cathode is as described above. In addition, the lithium secondary battery may further optionally comprise a battery container that accommodates the electrode assembly of the cathode, anode, and separator, and a sealing member that seals the battery container.

For example, in the lithium secondary battery, the anode comprises an anode current collector and an anode slurry disposed on the anode current collector.

For example, the anode current collector is not particularly limited so long as it possesses high conductivity without causing chemical changes in the battery, and examples include copper, stainless steel, aluminum, nickel, titanium, calcined carbon, copper or stainless steel surface-treated with carbon, nickel, titanium, silver, or the like, and aluminum-cadmium alloys. In addition, the anode current collector may typically have a thickness of 3 to 500 $\mu$m, and, similar to the cathode current collector, fine irregularities may be formed on the surface of the current collector to enhance the bonding strength of the anode active material. For example, it can be used in various forms such as films, sheets, foils, nets, porous bodies, foams, non-woven fabrics, etc.

For example, the anode slurry optionally includes a binder and a conductive material together with an anode active material. The anode slurry may be prepared by, for example, coating an anode current collector with an anode-forming composition comprising an anode active material and, optionally, a binder and a conductive material, followed by drying, or by casting the anode-forming composition onto a separate support, peeling a film obtained therefrom, and laminating the film onto an anode current collector.

For example, a compound capable of reversible intercalation and deintercalation of lithium can be used as the anode active material. Specific examples include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloys, Sn alloys, or Al alloys; metal oxides capable of doping and de-doping lithium, such as $SiO\beta$ ($0 < \beta < 2$), $SnO_2$, vanadium oxide, and lithium vanadium oxide; or composites comprising the metallic compounds and the carbonaceous materials, such as Si-C composites or Sn-C composites, and any one thereof or a mixture of two or more thereof may be used. Additionally, a metallic lithium thin film may be used as the anode active material. In addition, carbon materials may include both low-crystalline carbon and high-crystalline carbon. Representative examples of low-crystalline carbon include soft carbon and hard carbon, and representative examples of high-crystalline carbon include natural graphite or artificial graphite in the form of amorphous, plate-like, flaky, spherical, or fibrous structures, Kish graphite, pyrolytic carbon, mesophase pitch-based carbon fiber, meso-carbon microbeads, mesophase pitches, and high-temperature calcined carbon such as petroleum- or coal tar pitch-derived cokes.

Additionally, the binder and the conductive material may be the same as those described above for the cathode.

Meanwhile, in the lithium secondary battery, the separator separates the anode and the cathode and provides a pathway for lithium ion migration. Any separator commonly used in lithium secondary batteries may be used without particular limitation, and in particular, one having low resistance to ion transport in the electrolyte and excellent electrolyte wettability is preferred. Specifically, a porous polymer film, for example, a porous polymer film produced from a polyolefin-based polymer such as an ethylene homopolymer, a propylene homopolymer, an ethylene/butene copolymer, an ethylene/hexene copolymer, or an ethylene/methacrylate copolymer, or a laminated structure of two or more layers thereof, may be used. Additionally, conventional porous nonwoven fabrics, such as nonwoven fabrics made of high-melting-point glass fibers, polyethylene terephthalate fibers, etc., may be used. Additionally, a coated separator containing a ceramic component or a polymer material may be used to ensure heat resistance or mechanical strength, and may optionally be employed in a single-layer or multilayer structure.

In addition, examples of the electrolyte used in the present invention include, but are not limited to, organic liquid electrolytes, inorganic liquid electrolytes, solid polymer electrolytes, gel-type polymer electrolytes, solid inorganic electrolytes, and molten inorganic electrolytes that may be used in the manufacture of lithium secondary batteries.

Specifically, the electrolyte may include an organic solvent and a lithium salt.

For example, any organic solvent that can function as a medium through which ions involved in the electrochemical reaction of the battery migrate may be used without particular limitation. Specifically, the organic solvents may include ester solvents such as methyl acetate, ethyl acetate, $\gamma$-butyrolactone, and $\varepsilon$-caprolactone; ether solvents such as dibutyl ether or tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), ethyl methyl carbonate (EMC), ethylene carbonate (EC), and propylene carbonate (PC); alcohol solvents such as ethyl alcohol and isopropyl alcohol; nitriles such as R-CN (where R is a C2 to C20 linear, branched, or cyclic hydrocarbon group and may include a double-bonded aromatic ring or an ether bond); amides such as dimethylformamide; dioxolanes such as 1,3-dioxolane; or sulfolanes. Among these, a carbonate solvent is preferable, and more preferably, a mixture of a cyclic carbonate (e.g., ethylene carbonate or propylene carbonate) having a high dielectric constant capable of improving the charge/discharge performance of the battery and a linear carbonate compound having a low viscosity (e.g., ethyl methyl carbonate, dimethyl carbonate, or diethyl carbonate) may be used. In this case, the performance of the electrolyte may be improved when the cyclic carbonate and the chain carbonate are mixed and used in a volume ratio of about 1:1 to about 1:9.

For example, the lithium salt may be used without any special restrictions as long as it is a compound capable of providing lithium ions used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$. It is recommended that the concentration of the above lithium salt be used within the range of 0.1 to 2.0 M. When the concentration of the lithium salt falls within the above range, the electrolyte may have appropriate conductivity and viscosity, thereby exhibiting excellent electrolyte performance and enabling effective migration of lithium ions.

For example, in addition to the electrolyte components, the electrolyte may further comprise one or more additives, such as haloalkylene carbonate compounds (e.g., difluoroethylene carbonate), pyridine, triethyl phosphite, triethanolamine, cyclic ethers, ethylenediamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride, for the purpose of improving the lifetime characteristics of the battery, suppressing reduction in battery capacity, and improving the discharge capacity of the battery. At this time, the additive may be included in an amount of 0.1 to 5 wt% based on the total weight of the electrolyte.

A lithium secondary battery comprising a cathode active material according to the present disclosure is useful in portable devices such as mobile phones, laptop computers, and digital cameras, as well as in electric vehicles such as hybrid electric vehicles (HEVs).

Accordingly, in another embodiment of the present disclosure, there is provided a battery module comprising the lithium secondary battery as a unit cell and a battery pack comprising the same.

For example, the battery module or battery pack may be used as a power source for one or more medium- to large-sized devices, such as a power tool; an electric vehicle (EV), a hybrid electric vehicle (HEV), or a plug-in hybrid electric vehicle (PHEV); or a power storage system.

Hereinafter, the present invention will be described in more detail through examples. These embodiments are merely intended to illustrate the present disclosure, and therefore the scope of the present disclosure should not be construed as being limited thereto.

Preparation of high-nickel cathode active material

Preparation Examples 1 to 3

After charging 4 liters of distilled water into a reactor (capacity: 90 L), the temperature was maintained at 50 °C, and a 3.2 mol/L transition metal solution containin $NiSO_4$, $CoSO_4$, and $MnSO_4$ mixed at a molar ratio of nickel:cobalt:manganese = 0.8:0.12:0.01, was continuously supplied to the reactor at a rate of 300 mL/hr, while a 28 wt% aqueous ammonia solution was continuously supplied at a rate of 42 mL/hr. The impeller was stirred at a speed of 400 rpm, and a 40 wt% sodium hydroxide solution was added to maintain the pH at 9. Precursor particles were formed by co-precipitation reaction for 10 hours. The precursor particles were separated, washed, and dried in an oven at 130°C to prepare a precursor.

The precursor synthesized by the co-precipitation reaction was mixed with LiOH so that the molar ratio of Li/Me (Ni, Co, Mn) was 1.05, and then heat-treated for 10 hours in an oxygen atmosphere at the sintering temperature shown in Table 1 below to prepare a cathode active material comprising nickel-based lithium transition metal oxide secondary particles.

Table 1

|  | Preparation Example 1 | Preparation Example 2 | Preparation Example 3 |
|---|---|---|---|
| Sintering temperature (°C) | 700 | 710 | 710 |

Comparative Example 1

The cathode active material synthesized in Preparation Example 1 was pulverized using an air jet mill at a rotation speed of 10,000 rpm for 10 minutes to prepare polycrystalline cathode active material particles.

Comparative Example 2

The cathode active material synthesized in Preparation Example 2 was pulverized using an air jet mill at a rotation speed of 10,000 rpm for 10 minutes to prepare polycrystalline cathode active material particles.

Example 1

The cathode active material synthesized in Preparation Example 3 was first pulverized using an air jet mill at a rotation speed of 10,000 rpm for 10 minutes, and then pulverized a second time at a rotation speed of 17,000 rpm for 10 minutes to produce polycrystalline cathode active material particles.

Preparation of mid-nickel cathode active material

Preparation Examples 4 to 8

After charging 4 liters of distilled water into a reactor (capacity: 90 L), the temperature was maintained at 50 °C, and a 3.2 mol/L transition metal solution containing $NiSO_4$, $CoSO_4$, and $MnSO_4$ mixed in a molar ratio of nickel:cobalt:manganese as shown in Table 2 below, was continuously supplied to the reactor at a rate of 300 mL/hr, while a 28 wt% aqueous ammonia solution was continuously supplied at a rate of 42 mL/hr. The impeller was stirred at a speed of 400 rpm, and a 40 wt% sodium hydroxide solution was added to maintain the pH at 9. Precursor particles were formed by co-precipitation reaction for 10 hours. The precursor particles were separated, washed, and dried in an oven at 130°C to prepare a precursor.

The precursor synthesized by the co-precipitation reaction was mixed with LiOH so that the molar ratio of Li/Me (Ni, Co, Mn) was 1.05, and then heat-treated for 10 hours in an oxygen atmosphere at the sintering temperature shown in Table 2 below to prepare a cathode active material comprising nickel-based lithium transition metal oxide secondary particles.

Table 2

|  | Preparation Example 4 | Preparation Example 5 | Preparation Example 6 | Preparation Example 7 | Preparation Example 8 |
|---|---|---|---|---|---|
| Ni:Co:Mn Molar ratio | 65/5/30 | 60/10/30 | 64/4/32 | 64/4/32 | 64/4/32 |
| Sintering temperature (°C) | 970 | 980 | 950 | 960 | 970 |

Example 2

The cathode active material synthesized in Preparation Example 4 was first pulverized using an air jet mill at a rotation speed of 10,000 rpm for 10 minutes, and then pulverized a second time at a rotation speed of 17,000 rpm for 10 minutes, thereby producing polycrystalline cathode active material particles.

Example 3

The cathode active material synthesized in Preparation Example 5 was first pulverized using an air jet mill at a rotation speed of 10,000 rpm for 10 minutes, and then pulverized a second time at a rotation speed of 17,000 rpm for 10 minutes, thereby producing polycrystalline cathode active material particles.

Comparative Example 3

The cathode active material synthesized in Preparation Example 6 was pulverized using an air jet mill at a rotation speed of 10,000 rpm for 10 minutes, thereby preparing polycrystalline cathode active material particles.

Comparative Example 4

The cathode active material synthesized in Preparation Example 7 was pulverized using an air jet mill at a rotation speed of 10,000 rpm for 10 minutes, thereby producing polycrystalline cathode active material particles.

Comparative Example 5

The cathode active material synthesized in Preparation Example 8 was pulverized using an air jet mill at a rotation speed of 10,000 rpm for 10 minutes, thereby preparing polycrystalline cathode active material particles.

Manufacture of Secondary battery

The polycrystalline cathode active material of Examples 1 to 3 and Comparative Examples 1 to 5, a carbon black conductive agent, and a PVdF binder were mixed in a weight ratio of 96:2:2 in an N-methylpyrrolidone solvent to prepare a cathode slurry, which was then coated onto one surface of an aluminum current collector, dried at 100 °C, and rolled, thereby producing a cathode.

A lithium metal was used as an anode.

An electrode assembly was manufactured by interposing a porous polyethylene separator between the cathode and the anode manufactured as described above, placing the electrode assembly inside a case, and then injecting an electrolyte into the case, thereby manufacturing a lithium secondary battery. At this time, a lithium secondary battery was manufactured by dissolving 1.0 M lithium hexafluorophosphate ($LiPF_6$) in an organic solvent composed of ethylene carbonate/ethyl methyl carbonate/diethyl carbonate (mixed volume ratio of EC/EMC/DEC = 3/4/3).

Evaluation Example 1 - Measurement of H2 phase intensity ratio

The lithium secondary battery half-cell manufactured as described above was subjected to formation at 0.2C, and then charged at 0.05C and 4.3 V, after which cathode plate analysis was performed.

The values of the diffraction intensities (X-ray diffraction analysis) of the diffraction angles ($2\theta$) of the H2 phase and the H3 phase appearing on the (104) plane, obtained by irradiating Cu-K$\alpha$ rays onto the cathode plate, are shown in Table 3. In addition, the measured diffraction intensities of the H2 phase and H3 phase were calculated using Formula 1 below, and the H2 phase intensity ratio is shown in Table 3.

[Formula 1]

$$H2 \text{ intensity ratio} = \frac{H2 \text{ intensity}}{H2 \text{ intensity} + H3 \text{ intensity}} \times 100$$

Evaluation Example 2 - Lifetime Characteristics Evaluation

After repeating 500 charge/discharge cycles of the lithium secondary battery full-cell manufactured as described above, the remaining battery capacity relative to the initial state was measured as a ratio (lifetime) and is presented in Table 3.

Table 3

| Classification | Lifetime | Particle diameter after crushing (D50) ($\mu$m) | H2 intensity ratio |
|---|---|---|---|
| Comparative Example 1 | 56% | 13.28 | 29% |
| Comparative Example 2 | 78% | 13.51 | 26% |
| Example 1 | 85% | 5.62 | 23% |
| Example 2 | 79% | 3.82 | 11% |
| Example 3 | 82% | 3.9 | 10% |
| Comparative Example 3 | 66% | 2.12 | 19% |
| Comparative Example 4 | 69% | 2.56 | 17% |
| Comparative Example 5 | 74% | 3.08 | 17% |

Evaluation Example 3 - Observation of polycrystalline particle active material

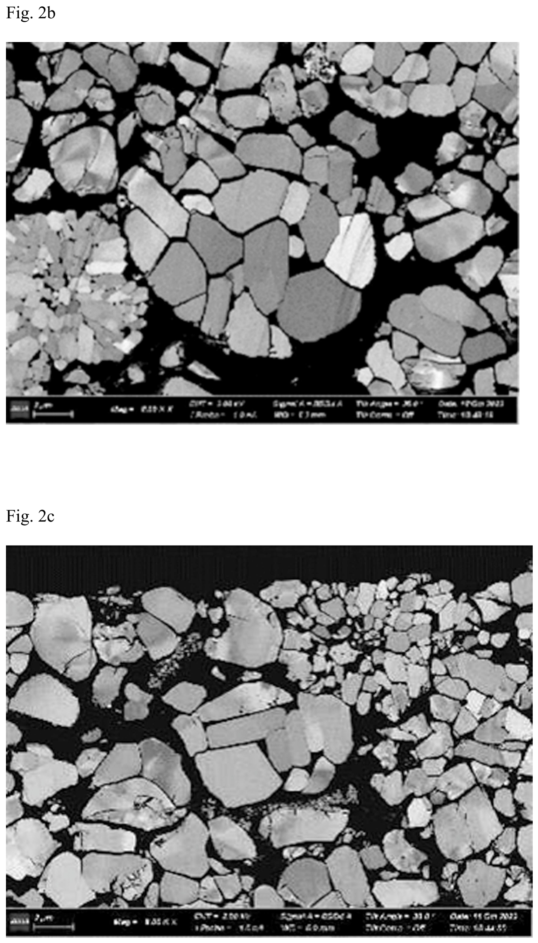

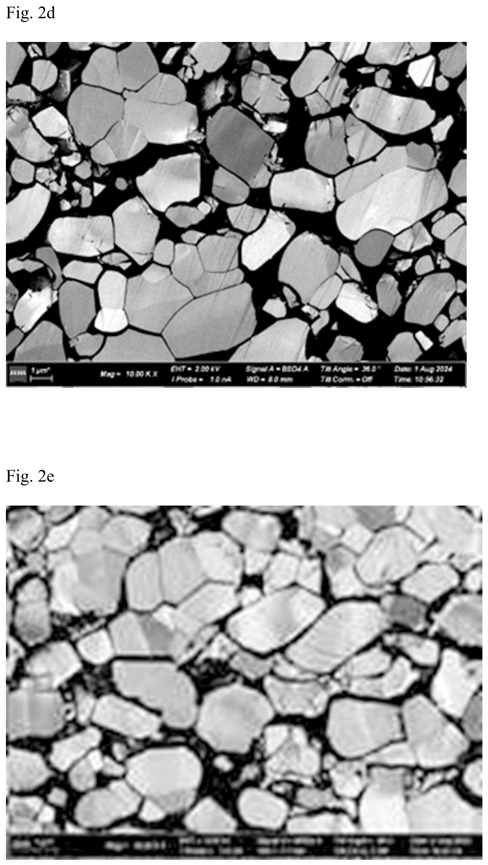

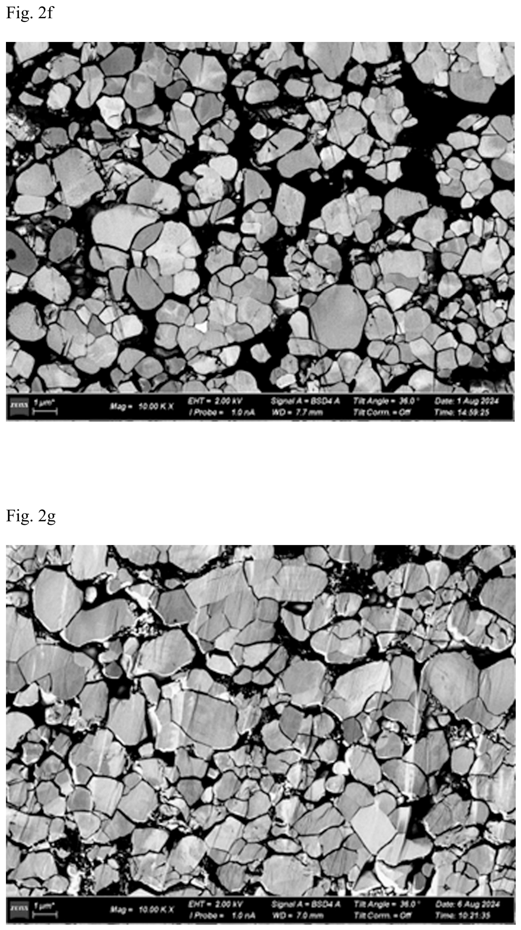

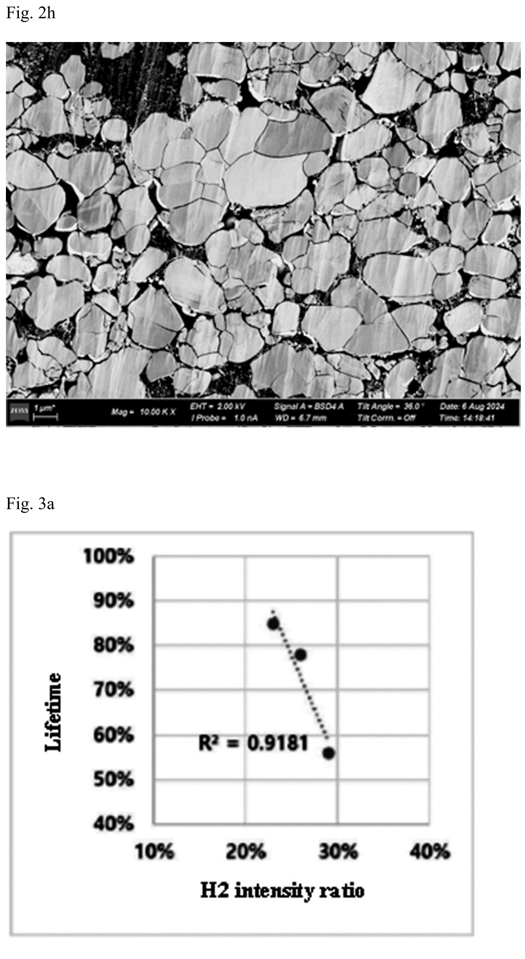

*167 The polycrystalline cathode active material particles of Examples 1 to 3 and Comparative Examples 1 to 5 were photographed using a scanning electron microscope (SEM) and are shown in FIG. 2.

Figure 2a is a photograph of the polycrystalline cathode active material particles of Comparative Example 1 taken using a scanning electron microscope (SEM).

Figure 2b is a photograph of the polycrystalline cathode active material particles of Comparative Example 2 taken using a scanning electron microscope (SEM).

FIG. 2c is a photograph of the polycrystalline cathode active material particles of Example 1 taken using a scanning electron microscope (SEM).

Figure 2d is a photograph of the polycrystalline cathode active material particles of Example 2 taken using a scanning electron microscope (SEM).

Figure 2e is a photograph of the polycrystalline cathode active material particles of Example 3 taken using a scanning electron microscope (SEM).

Figure 2f is a photograph of the polycrystalline cathode active material particles of Comparative Example 3 taken using a scanning electron microscope (SEM).

Figure 2g is a photograph of the polycrystalline cathode active material particles of Comparative Example 4 taken using a scanning electron microscope (SEM).

Figure 2h is a photograph of the polycrystalline cathode active material particles of Comparative Example 5 taken using a scanning electron microscope (SEM).

Referring to Table 3, it can be confirmed that the lifetime characteristics of the secondary battery of Example 1, in which the H2 phase intensity ratio in the high-nickel cathode active material is 10% or more and 25% or less, are markedly superior to those of the secondary batteries of Comparative Examples 1 and 2, in which the H2 phase intensity ratio exceeds 25%.

In addition, referring to FIG. 2c, it was confirmed that the high-nickel cathode active material of Example 1, in which the H2 phase intensity ratio was 10% or more and 25% or less, did not include isolated particles. Additionally, it was confirmed that there were 2 to 5 primary particles within the secondary particles.

Meanwhile, FIG. 3a is a graph comparing the correlation between the H2 phase intensity ratio and lifetime of Comparative Examples 1 and 2 and Example 1. Referring to FIG. 3a, it can be confirmed that the lifetime is excellent when the H2 intensity ratio is 10% or more and 25% or less, as in Example 1.

Referring to Table 3, it can be confirmed that the lifetime characteristics of the secondary batteries of Examples 2 and 3, in which the H2 phase intensity ratio is 5% or more and 16% or less in the mid-nickel cathode active material, are significantly superior to those of the secondary batteries of Comparative Examples 3 to 5 in which the H2 phase intensity ratio exceeds 16%.

In addition, referring to FIG. 2d, it was confirmed that the mid-nickel cathode active materials of Examples 2 and 3, in which the H2 phase intensity ratio was 5% or more and 16% or less, did not contain isolated particles. Additionally, it was confirmed that there were 2 to 5 primary particles within the secondary particles.

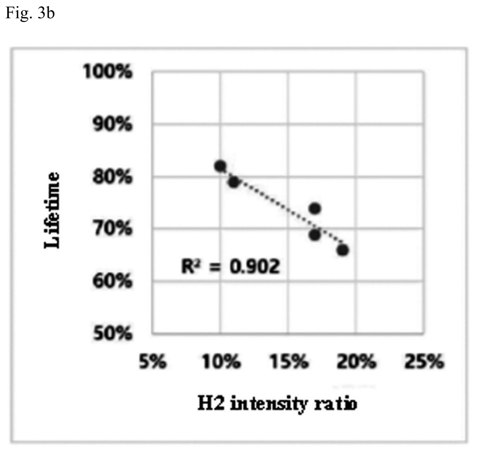

Meanwhile, FIG. 3b is a graph comparing the correlation between the H2 phase intensity ratio and lifetime of Examples 2 and 3 and Comparative Examples 3 to 5. Referring to FIG. 3b, it can be confirmed that the lifetime is excellent when the H2 intensity ratio is 5% or more and 16% or less, as in Examples 1.

Meanwhile, referring to FIGS. 2a to 2h, it can be confirmed that as the number of primary particles in the secondary particles increases, the number of isolated particles increases, and as the number of isolated particles increases, the H2 intensity ratio also increases and the lifetime characteristics also decrease.

That is, according to one embodiment of the present disclosure, the XRD peak intensities of the H2 phase and the H3 phase are measured and the ratio is calculated, which may serve as an indicator that the greater the amount of the H2 phase, the more isolated particles are present due to insufficient desorption of lithium ions. In addition, since there is no lifetime reduction in the absence of isolated particles, the size and number of primary particles and the size of secondary particles at this time can be judged as optimal conditions.

## DESCRIPTION OF REFERENCE NUMERALS

1: Cathode active material

10: Primary particle

20: Secondary particle

**Claims**

1. A polycrystalline cathode active material, comprising: primary particles comprising nickel and having an average particle diameter (D50) in a range of 500 nm to 5 μm; and

   secondary particles formed by an agglomeration of the primary particles;
   wherein a portion of the primary particles is exposed on an outer surface of the secondary particles.

2. The polycrystalline cathode active material of claim 1,

   wherein an average particle diameter (D50) of the primary particles and the secondary particles is determined by an H2 intensity ratio calculated by the following Formula 1:

   [Formula 1]

   $$H2 \text{ intensity ratio} = \frac{H2 \text{ intensity}}{H2 \text{ intensity} + H3 \text{ intensity}} \times 100$$

   (In Formula 1, the H2 intensity and the H3 intensity are the peak intensities of an H2 phase and an H3 phase obtained through X-ray diffraction (XRD) analysis.)

3. The polycrystalline cathode active material of claim 1,

   wherein a number of the primary particles forming the secondary particles is determined by an H2 intensity ratio calculated by the following Formula 1:

   [Formula 1]

   $$H2 \text{ intensity ratio} - \frac{H2 \text{ intensity}}{H2 \text{ intensity} + H3 \text{ intensity}} \times 100$$

   (In Formula 1, the H2 intensity and the H3 intensity are the peak intensities of an H2 phase and an H3 phase obtained through X-ray diffraction (XRD) analysis.)

4. The polycrystalline cathode active material of claim 2,

   wherein, when a nickel content of the primary particles is in a range of 50 mol% to less than 80 mol%, the average particle diameter (D50) of the primary particles and the secondary particles is measured when the H2 intensity ratio is in a range of 5% to 16%.

5. The polycrystalline cathode active material of claim 3,

   wherein, when a nickel content of the primary particles is in a range of 50 mol% to less than 80 mol%, the number of the primary particles forming the secondary particles is measured when the H2 intensity ratio is in a range of 5% to 16%.

6. The polycrystalline cathode active material of claim 2,

   wherein, when a nickel content of the primary particles is 80 mol% or more, the average particle diameter (D50) of the primary particles and the secondary particles is measured when the H2 intensity ratio is in a range of 10% to 25%.

7. The polycrystalline cathode active material of claim 3,

   wherein, when a nickel content of the primary particles is 80 mol% or more,
   the number of the primary particles forming the secondary particles is measured when the H2 intensity ratio is in a range of 10% to 25%.

8. The polycrystalline cathode active material of claim 1,
   wherein an average particle diameter (D50) of the secondary particles is 1.5 to 5.0 times an average particle diameter (D50) of the primary particles.

9. The polycrystalline cathode active material of claim 1,
   wherein the secondary particles are formed by an agglomeration of 2 to 5 primary particles.

10. A cathode slurry composition, comprising the polycrystalline cathode active material of claim 1 to 9, a conductive agent, and a binder.

11. A lithium secondary battery, comprising a cathode formed by coating a current collector with the cathode slurry composition of claim 10.

Fig. 1

<u>1</u>

Fig. 2a

Fig. 2b

Fig. 2c

Fig. 2d

Fig. 2e

Fig. 2f

Fig. 2g

Fig. 2h

Fig. 3a

Fig. 3b

**EUROPEAN SEARCH REPORT**

Application Number

EP 25 21 2539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 220 772 A1 (LG ENERGY SOLUTION LTD [KR]) 2 August 2023 (2023-08-02) * paragraph [008.00143]; figure 7; example 1; table 1 * | 1-11 | INV. H01M4/525 C01G53/82 |
| A | KIM UN-HYUCK ET AL: "High-Energy W-Doped Li[Ni0.95Co0.04Al0.01]O2 Cathodes for Next-Generation Electric Vehicles", ENERGY STORAGE MATERIALS, vol. 33, 30 August 2020 (2020-08-30), pages 399-407, XP093214111, ISSN: 2405-8297, DOI: 10.1016/j.ensm.2020.08.013 * figure 4 * | 1-11 | |
| A | JP 2024 500909 A (LG ENERGY SOLUTION LTD) 10 January 2024 (2024-01-10) * example 1 * | 1-11 | |
| A | WO 2022/265296 A1 (LG ENERGY SOLUTION LTD [KR]) 22 December 2022 (2022-12-22) * example 1 * | 1-11 | TECHNICAL FIELDS SEARCHED (IPC) |
| A | WO 2024/205103 A1 (POSCO HOLDINGS INC [KR]; RES INST IND SCIENCE & TECH [KR]) 3 October 2024 (2024-10-03) * examples 1-2 * | 1-11 | H01M C01G |

The present search report has been drawn up for all claims

| Place of search | Date of completion of the search | Examiner |
|---|---|---|
| The Hague | 27 February 2026 | Golizadeh, Mehran |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 21 2539

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2026

| Patent document cited in search report | | | Publication date | Patent family member(s) | | Publication date |
|---|---|---|---|---|---|---|
| EP | 4220772 | A1 | 02-08-2023 | CN | 116420251 A | 11-07-2023 |
| | | | | EP | 4220772 A1 | 02-08-2023 |
| | | | | JP | 7699206 B2 | 26-06-2025 |
| | | | | JP | 2023546964 A | 08-11-2023 |
| | | | | KR | 20220057480 A | 09-05-2022 |
| | | | | US | 2023378456 A1 | 23-11-2023 |
| | | | | WO | 2022092922 A1 | 05-05-2022 |
| JP | 2024500909 | A | 10-01-2024 | CN | 116583972 A | 11-08-2023 |
| | | | | EP | 4254553 A1 | 04-10-2023 |
| | | | | JP | 7607776 B2 | 27-12-2024 |
| | | | | JP | 2024500909 A | 10-01-2024 |
| | | | | KR | 20220103511 A | 22-07-2022 |
| | | | | US | 2024132375 A1 | 25-04-2024 |
| | | | | WO | 2022154603 A1 | 21-07-2022 |
| WO | 2022265296 | A1 | 22-12-2022 | CN | 116686112 A | 01-09-2023 |
| | | | | EP | 4261943 A1 | 18-10-2023 |
| | | | | JP | 7642827 B2 | 10-03-2025 |
| | | | | JP | 2024501688 A | 15-01-2024 |
| | | | | KR | 20220168979 A | 26-12-2022 |
| | | | | US | 2024105934 A1 | 28-03-2024 |
| | | | | WO | 2022265296 A1 | 22-12-2022 |
| WO | 2024205103 | A1 | 03-10-2024 | CN | 120981934 A | 18-11-2025 |
| | | | | EP | 4693490 A1 | 11-02-2026 |
| | | | | KR | 20240147319 A | 08-10-2024 |
| | | | | WO | 2024205103 A1 | 03-10-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230162830